(19) Europäisches Patentamt
European Patent Office
Office européen des brevets

(11) EP 3 613 799 B1

(12) EUROPEAN PATENT SPECIFICATION

(45) Date of publication and mention of the grant of the patent:
**05.06.2024 Bulletin 2024/23**

(21) Application number: **18787265.0**

(22) Date of filing: **19.04.2018**

(51) International Patent Classification (IPC):
***C08J 5/22*** (2006.01) ***B01D 67/00*** (2006.01)
***B01D 71/80*** (2006.01) ***B01D 71/82*** (2006.01)
*B01D 71/32* (2006.01) *B01D 71/36* (2006.01)

(52) Cooperative Patent Classification (CPC):
**C08J 5/2293; B01D 67/0093; B01D 67/00931; B01D 71/80; B01D 71/82;** B01D 71/32; B01D 71/36; B01D 2325/42; C08J 2327/18

(86) International application number:
**PCT/KR2018/004559**

(87) International publication number:
**WO 2018/194395 (25.10.2018 Gazette 2018/43)**

(54) **CHEMICALLY MODIFIED ANION EXCHANGE MEMBRANE AND MANUFACTURING METHOD THEREFOR**

CHEMISCH MODIFIZIERTE ANIONENAUSTAUSCHMEMBRAN UND HERSTELLUNGSVERFAHREN DAFÜR

MEMBRANE D'ÉCHANGE D'ANIONS CHIMIQUEMENT MODIFIÉE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2017 KR 20170051625**
**12.04.2018 KR 20180042725**

(43) Date of publication of application:
**26.02.2020 Bulletin 2020/09**

(60) Divisional application:
**21196379.8 / 3 964 540**

(73) Proprietor: **Dankook University Cheonan Campus Industry Academic Corporation Foundation**
**Cheonan-si, Chungcheongnam-do 31116 (KR)**

(72) Inventors:
- **LEE, Chang Hyun**
**Seongnam-si**
**Gyeonggi-do 13589 (KR)**
- **HWANG, Jin Pyo**
**Cheonan-si**
**Chungcheongnam-do 31116 (KR)**

(74) Representative: **Macquet, Christophe**
**Macquet & Associés**
**Arche des Dolines**
**7, rue Soutrane**
**06560 Sophia Antipolis (FR)**

(56) References cited:

| | |
|---|---|
| **EP-A1- 0 166 015** | **CN-A- 102 456 892** |
| **CN-A- 105 390 645** | **US-A- 3 282 875** |
| **US-A1- 2004 101 741** | **US-A1- 2013 310 246** |

- **GUILLAUME COUTURE ET AL: "Polymeric materials as anion-exchange membranes for alkaline fuel cells", PROGRESS IN POLYMER SCIENCE, PERGAMON PRESS, OXFORD, GB, vol. 36, no. 11, 14 April 2011 (2011-04-14), pages 1521-1557, XP028239764, ISSN: 0079-6700, DOI: 10.1016/J.PROGPOLYMSCI.2011.04.004 [retrieved on 2011-04-21]**
- **KIYOHIDE MATSUI ET AL: "Novel anion exchange membranes having fluorocarbon backbone: Preparation and stability", JOURNAL OF APPLIED POLYMER SCIENCE, vol. 32, no. 3, 20 August 1986 (1986-08-20), pages 4137-4143, XP055749132, US ISSN: 0021-8995, DOI: 10.1002/app.1986.070320327**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- CHAMOULAUD, GWENAËL et al.: "Chemical Modification of the Surface of a Sulfonated Membrane by Formation of a Sulfonamide Bond", Langmuir, vol. 20, no. 12, 4 May 2004 (2004-05-04), pages 4989-4995, XP055023853,
- LUO, QINGTAO et al.: "Modification of Nafion Membrane Using Interfacial Polymerization for Vanadium Redox Flow Battery Applications", Journal of Membrane Science, vol. 311, no. 1-2 20 March 2008 (2008-03-20), pages 98-103, XP022487832, Retrieved from the Internet: URL:https://doi.org/10.1016/j.memsci.2007.11.055
- ARGES, CHRISTOPHER G. et al.: "The Chalkboard: Anion Exchange Membrane Fuel Cells", The Electrochemical Society Interface, vol. 19, no. 2 2010, pages 31-35, XP055560305, Retrieved from the Internet: URL:doi: 10.1149/2.F03102if
- KAMECHE, M. et al.: "Characterisation of Nafion 117 Membrane Modified Chemically with a Conducting Polymer: An Application to the Demineralisation of Sodium Iodide Organic Solutions", Separation and Purification Technology, vol. 52, no. 3 January 2007 (2007-01), pages 497-503, XP005785620, Retrieved from the Internet: URL:https://doi.org/10.1016/j.seppur.2006.06.001
- LI, LEI et al.: "Chemical Modification of Nafion Membrane with 3,4-ethylenedioxythiophene for Direct Methanol Fuel Cell Application", Journal of Power Sources, vol. 175, no. 1 3 January 2008 (2008-01-03), pages 256-260, XP022361636, Retrieved from the Internet: URL:https://doi.org/10.1016/j.jpowsour.2007.09.001

## Description

[Technical Field]

The present invention relates to chemically modified an anion exchange membrane and a method of preparing the same, and more particularly, to a method of preparing an anion exchange membrane by modifying sulfonic acid groups ($-SO_3^-H^+$) of a perfluorinated sulfonic acid electrolyte membrane with ammonium groups and an anion exchange membrane, which are chemically modified thereby.

[Background Art]

An ion-exchange membrane refers to a polymer membrane that selectively permeates anions and cations and is classified into a cation exchange membrane and an anion exchange membrane according to its charge characteristics, respectively. A cation exchange membrane has negatively charged functional groups, permeates only cations by electrical attraction, and blocks the movement of anions by electrostatic repulsion. In addition, an anion exchange membrane has positively charged functional groups, transports anions by electrical attraction, and blocks the movement of cations by electrostatic repulsion.

Such ion-exchange membranes should have excellent selective permeability and ion exchange capacity, low electrical resistance and diffusion coefficient, excellent electrical properties, and low production costs. Particularly, ion-exchange membranes in the field of fuel cells or redox flow cells require larger ion exchange capacity and better electrical properties than conventional membranes.

However, when DuPont Nafion 117, which is a commercially available anion exchange membrane, is used, since the crossover of ions in a battery occurs severely, self-discharge of the battery occurs and thus the battery has low efficiency. In addition, the ion-exchange membranes used as a separator in the water treatment field have to have excellent resistance to strong acid and base substances, and AMX known as a representative anion exchange membrane has excellent ion exchange capacity and electrical property, but poor chemical resistance, thereby easily reducing durability and efficiency.

Meanwhile, in Korean Unexamined Patent Application No. 10-2013-00255821, an ion-exchange membrane prepared by synthesizing 4-vinylbenzyl chloride, styrene and 2-hydroxyethyl acrylate, amination and crosslinking, and a method of preparing the same are disclosed, and in Korean Unexamined Patent Application No. 10-2014-0119479, a method of preparing an anion exchange membrane by converting a copolymer containing a vinyl imidazole-based compound, trifluoroalkyl(meth)acrylate, and a divinylbenzene-based monomer into a quaternary ammonium compound and performing thermal treatment is disclosed. However, since such a preparation method has complicated steps, production efficiency is lowered, and since the thickness of the membrane increases to reinforce the mechanical property or chemical resistance of the ion-exchange membrane, ion exchange performance is lowered. COUTURE, G. et al. Polymeric materials as anion-exchange membranes for alkaline fuel cells. Progress in Polymer Science. 2011, Vol. 36, No. 11, pages 1521-1557, ISSN 0079-6700, CN 102 456 892 A, US 2013/310246, US 2004/101741 and MATSUI, K. Novel anion exchange membranes having fluorocarbon backbone: Preparation and stability. Journal of Applied Polymer Science. 1986, vol. 32, No 3, pages 4137-4143, ISSN 0021-8995, disclose anion exchange membranes in which sulfonic acid groups in a perfluorinated sulfonic acid electrolyte membrane are substituted with ammonium groups.

For this reason, the development of anion exchange membranes is required to solve the difficulty in membrane formation due to low solubility, which is the unique characteristic of an anion conductive ionomer, a high resistance due to a large thickness, and low performance of an anion exchange membrane having a hydrocarbon-based main chain.

[Disclosure]

[Technical Problem]

The present invention is directed to providing a method of preparing an anion exchange membrane by substituting sulfonic acid groups ($-SO_3^-H^+$) in a perfluorinated sulfonic acid electrolyte membrane with ammonium groups through chemical modification and thus may solve the difficulty in membrane formation due to low solubility, which is the unique characteristic of an anion conductive ionomer, and a high resistance due to a large thickness.

The present invention is also directed to providing an anion exchange membrane which has stabilized electron density due to the introduction of a bridge group according to chemical modification and is improved in ion conductivity and electrochemical performance.

[Technical Solution]

To solve the above-described problems, the present invention provides a method of preparing an anion exchange membrane characterized by substituting sulfonic acid groups in a perfluorinated sulfonic acid electrolyte membrane with ammonium groups, which are anion-conductive functional groups, the method comprising: a) chlorinating sulfonic acid groups in a perfluorinated sulfonic acid electrolyte membrane; b) nitrating the chlorinated electrolyte membrane; c) aminating the nitrated electrolyte membrane; and d) activating the anion-conductive functional groups by treating the aminated electrolyte membrane under alkaline conditions.

The present invention also provides an anion exchange membrane in which sulfonic acid groups in a perfluorinated sulfonic acid electrolyte membrane are substituted with ammonium groups, wherein the anion-conductive functional groups are chemically bonded with - $SO_2$ groups in the perfluorinated sulfonic acid electrolyte membrane via bridge groups selected from methyl group and phenyl group.

[Advantageous Effects]

Since an anion exchange membrane is prepared by chemically modifying sulfonic acid groups in a perfluorinated sulfonic acid electrolyte membrane according to the present invention, it can solve the difficulty in membrane formation due to low solubility, which is a peculiar characteristic of anion conductive ionomers, and high resistance due to a large thickness.

Generally, since commercialized anion-exchange membranes having a hydrocarbon-based main chain does not have a hydrophilic-hydrophobic phase-separation structure, it exhibits low performance, but in the perfluorinated polymer electrolyte membrane used in the present invention, the hydrophilic-hydrophobic phase separation structure is suitable for ion exchange, and thus it can exhibit high performance with a small thickness. However, fluorine of the ion-exchange membrane having a perfluorinated main chain has high electronegativity such that anion conductive groups applied to the terminal becomes chemically unstable, and in the present invention, an electron density can be stabilized by introducing bridge groups in chemical modification. In addition, the anion exchange membrane prepared according to the present invention has a small thickness, excellent stability, and high anionic conductivity and electrochemical performance, and thus it can be applied in a variety of industrial fields.

[Description of Drawings]

FIG. 1 is a Fourier transform infrared (FT-IR) analysis graph for confirming reaction steps of Example 1 of the present invention.

FIG. 2 is a set of images showing hydrophilicity measured by reaction step according to an example of the present invention.

FIG. 3 shows the densities of membranes prepared according to examples, reference examples and comparative examples of the present invention.

FIGS. 4 and 5 are the table and graph showing the $OH^+$ ion conductivities of the anion exchange membranes prepared according to examples, reference examples and comparative examples of the present invention, respectively.

FIG. 6 is a diagram showing the hydrophilic-hydrophobic phase separation structure of a perfluorinated ionomer and a hydrocarbon-based ionomer.

FIGS. 7 and 8 are the table and graph showing the area specific resistance of the anion exchange membranes prepared according to examples, reference examples and comparative examples of the present invention.

[Modes of the Invention]

The present invention will be described in further detail with reference to examples and drawings as below.

A method of preparing an anion exchange membrane according to the present invention is characterized substituting sulfonic acid groups in a perfluorinated sulfonic acid electrolyte membrane with ammonium groups, which are anion-conductive functional groups, the method comprising: a) chlorinating sulfonic acid groups in a perfluorinated sulfonic acid electrolyte membrane; b) nitrating the chlorinated electrolyte membrane; c) aminating the nitrated electrolyte membrane; and d) activating the anion-conductive functional groups by treating the aminated electrolyte membrane under alkaline conditions.

The chemical modification of anion exchange membrane according to the present invention is characterized by introducing ammonium groups as shown in Reaction Scheme 1 below.

[Reaction Scheme 1]

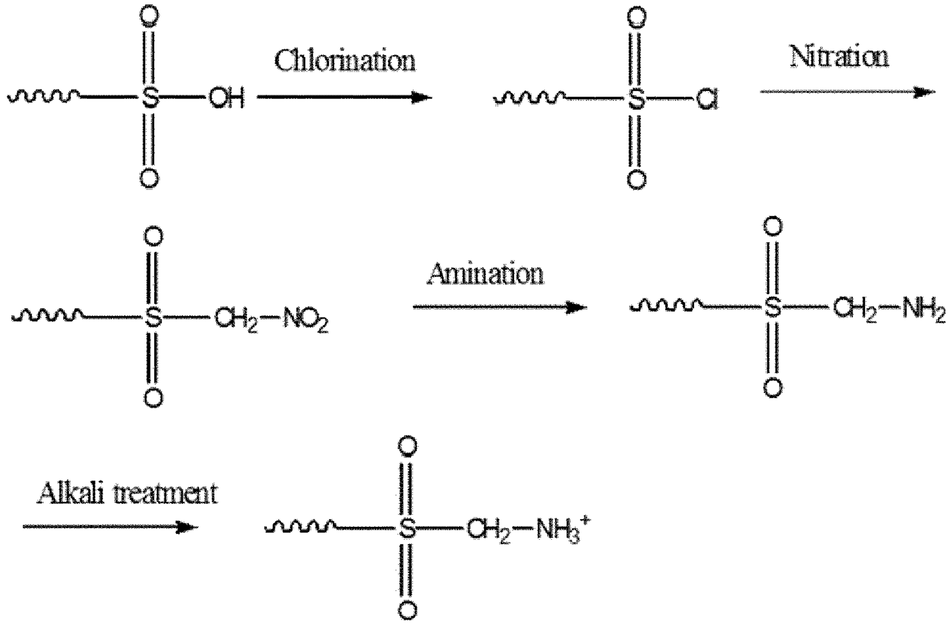


In the present invention, modification may progress according to Reaction Scheme 1, and specifically, the chemical modification of an anion exchanger may be performed according to a first step (chlorination, -OH → -Cl), a second step (nitration, -Cl → $-NO_2$), a third step (amination, $-NO_2$ → $-NH_2$), and a fourth step (alkaline treatment, $-NH_2$ → $-NH_3^+$).

[Reaction Scheme 2]

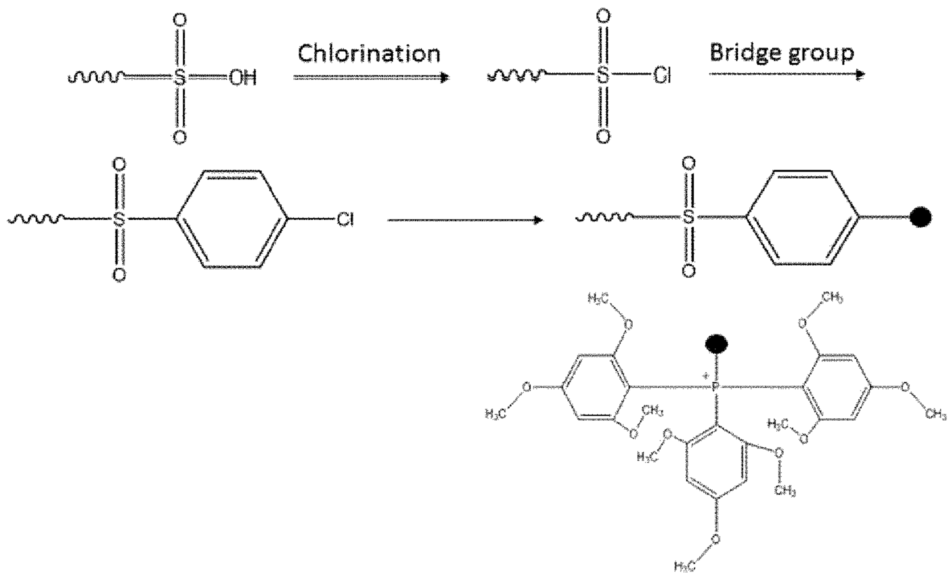


In addition, but not part of the claimed invention, modification may progress according to Reaction Scheme 2, and specifically, the chemical modification of an anion exchanger may be performed according to a first step (chlorination, -OH → -Cl), a second step (introduction of a bridge group, -Cl → $-C_6H_5Cl$), and a third step (substitution the chlorine group with phosphonium group, -Cl → $-PR_3^+$).

[Reaction Scheme 3]

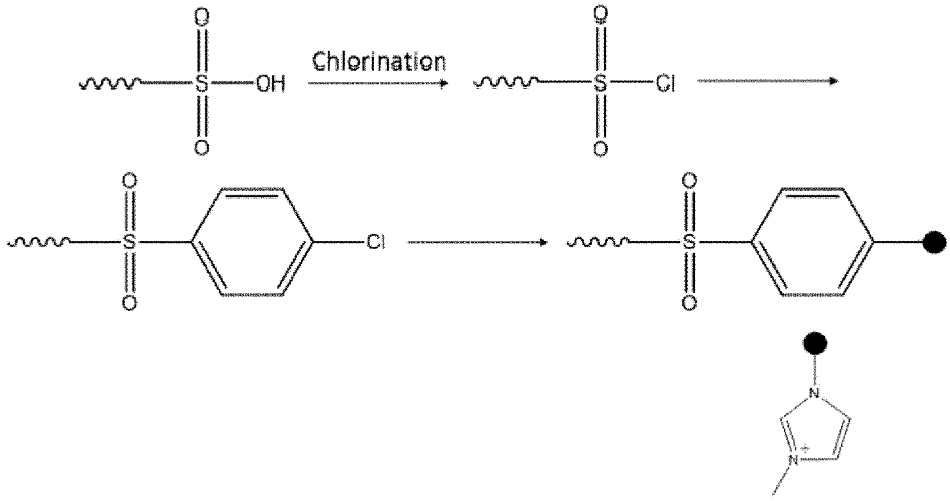


In addition, but not part of the claimed invention, modification may progress according to Reaction Scheme 3, and specifically, chemical modification of an anion exchanger may be performed according to a first step (chlorination, -OH → -Cl), a second step (introduction of a bridge group, -Cl → -$C_6H_5Cl$), and a third step (substitution the chlorine group with imidazolium group, -Cl → -$C_3H_3N_2^+$).

[Reaction Scheme 4]

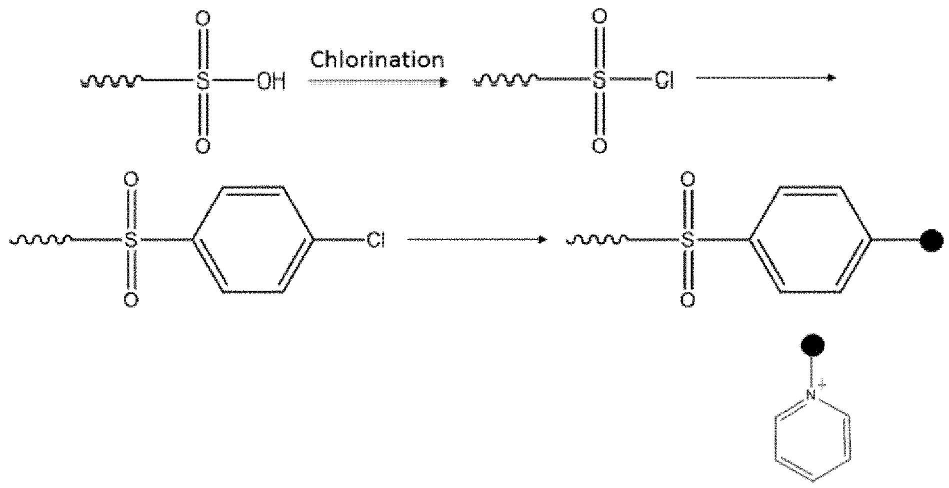


In addition, but not part of the claimed invention, modification may progress according to Reaction Scheme 4, and specifically, the chemical modification of an anion exchanger may be performed according to a first step (chlorination, -OH → -Cl), a second step (introduction of a bridge group, -Cl → -$C_6H_5Cl$), and a third step (substitution the chlorine group with pyridinium group, -Cl → -$C_5H_5N^+$).

[Reaction Scheme 5]

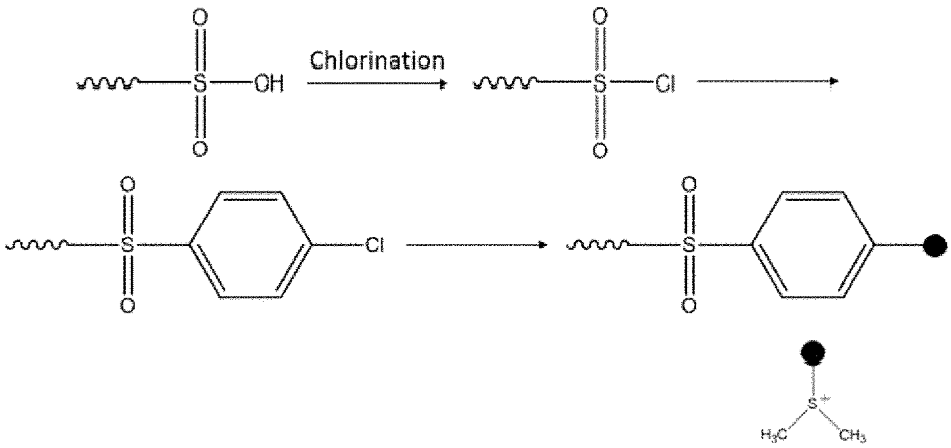


In addition, but not part of the claimed invention, modification may progress according to Reaction Scheme 5, and specifically, the chemical modification of an anion exchanger may be performed according to a first step (chlorination, -OH → -Cl), a second step (introduction of a bridge group, -Cl → $-C_6H_5Cl$), and a third step (substitution the chlorine group with sulfonium group, -Cl → $-SR_2^+$).

As a perfluorinated sulfonic acid electrolyte membrane that can be used in the present invention, a perfluorinated sulfonic acid ionomer free-standing membrane or a reinforced composite membrane including porous supports may be used.

Specifically, as the perfluorinated sulfonic acid ionomer, for example, poly(perfluorosulfonic acid)s, sulfonic acid-containing-copolymers composed of tetrafluoroethylene and fluorovinylether, and their mixtures thereof, may be used, but the present invention is not limited thereto.

In addition, when a reinforced composite membrane are used as the perfluorinated sulfonic acid electrolyte membrane, porous supports included in the reinforced composite membrane may be, for example, polymers such as polytetrafluoroethylene, poly(vinyl difluoroethylene), polyethylene, polypropylene, poly(ethylene terephthalate), polyimide and polyamide, but the present invention is not particularly limited thereto.

Specifically, the chemical modification according to the present invention is described step by step as follows. First, the chlorination step may be performed by treating the perfluorinated sulfonic acid electrolyte membrane with a solution containing one or more compounds selected from the group consisting of $SOCl_2$, $MeSO_2Cl$, $PCl_5$, $POCl_3$, and dichloromethane (DCM), but the present invention is not limited thereto. Any solution that can chlorinate sulfonic acid groups may be used.

In addition, chlorination is preferably performed at 10 to 110 °C, and a reaction time may be selectively adjusted depending on how much the chemical modification of sulfonic acid groups is needed, and generally, it is preferable that the reaction time be in a range of approximately 30 seconds to 24 hours.

After the chlorination, reaction steps depend on the type of desired anion conductive groups. Among these reaction steps, the introduction of ammonium groups as anion conductive groups includes nitration, amination, and alkaline treatment after the chlorination according to Reaction Scheme 1.

Specifically, nitration may be performed by treating the perfluorinated electrolyte membrane undergoing chlorination with nitromethane or nitrobenzene solution, but the present invention is not limited thereto. Any solution that can substitute -Cl with $-NO_2$ can be used. Here, the nitration is preferably performed in the presence of sodium carbonate ($Na_2CO_3$) catalyst. In addition, the nitration is preferably performed at 10 to 110 °C, and a reaction time is suitably in a range of 30 seconds to 24 hours.

Next, the amination of the nitrated electrolyte membrane is performed. The amination may be performed by treating the nitrated electrolyte membrane, for example, with HCl aqueous solution, but the present invention is not limited thereto. Any solution that can substitute $-NO_2$ with $-NH_2$ may be used. The amination is preferably performed at 10 to 110 °C, and it is preferable that the reaction time be in a range of approximately 30 seconds to 12 hours.

Afterward, to activate an anion conductive group, alkaline treatment is performed. The alkaline treatment may be performed by treating the aminated electrolyte membrane with, for example, an aqueous solution containing one or more compounds selected from the group consisting of LiOH, NaOH and KOH, but the present invention is not limited thereto. Any solution that can substitute $-NH_2$ with $-NH_3^+$ may be used. The alkaline treatment is preferably performed at 10 to 110 °C, and a reaction time is preferably in a range of approximately 30 seconds to 24 hours.

In addition, the chemical modification of sulfonic acid groups with ammonium groups according to the present invention may further include washing and drying after each of the chlorination, the nitration, the amination and the alkaline treatment.

Meanwhile, in the chemical modification according to the present invention, the reaction temperature and time ranges of each step may be appropriately adjusted as needed, but the present invention is not particularly limited thereto. However, when each reaction is performed in temperature and time ranges lower than the above-mentioned temperature and time ranges, each groups may not be sufficiently converted, and thus the performance of the prepared anion exchange membranes may decrease, and when the reaction is performed in temperature and time ranges higher than the above-mentioned temperature and time ranges, the cost may increase due to the decrease in process efficiency according to a long-term reaction. For this reason, the reaction is preferably performed in each condition range.

Meanwhile, the anion exchange membrane according to the present invention are an ion-exchange membrane in which sulfonic acid groups in a perfluorinated sulfonic acid electrolyte membrane are substituted with ammonium groups, wherein the anion conductive groups of the chemically-modified anion exchange membrane are bound with $-SO_2$ groups in the perfluorinated sulfonic acid electrolyte membrane via bridge groups selected from methyl group and phenyl group. Meanwhile, the $OH^-$ conductivity of the ion-exchange membrane substituted with anion conductive groups according to the present invention is in a range of 0.001 to 0.3 S/cm, and the area specific resistance thereof is in a range of 0.0033 to 17.9 $\Omega$ $cm^2$, and thus the anion exchange membrane exhibits very excellent performance and properties.

Hereinafter, the present invention will be described in further detail with reference to specific examples. The following examples are provided to help in understanding the present invention, but it should not be interpreted that the scope of the present invention is limited thereto.

<Example 1>

Chlorination (the first step) in Reaction Scheme 1 was performed by stirring 5 g/mL of $SOCl_2$/dichloromethane at a speed of 400 rpm in a nitrogen atmosphere at 40 °C and reacting Nafion117 (membrane thickness: 175 μm), which is a perfluorinated sulfonic acid ionomer-based electrolyte membrane, for 4 hours. After the reaction, the resulting product was washed with dichloromethane for 5 minutes and dried in a vacuum oven at 80 °C for 4 hours.

Subsequently, nitration (the second step) was performed by stirring a nitromethane solution at a speed of 200 rpm in a nitrogen atmosphere at 80 °C, adding sodium carbonate as a catalyst at 20 wt% with respect to the weight of the electrolyte membrane obtained after the first step, and reacting the chlorinated Nafion117 for 7 hours. Afterward, the resulting product was washed with deionized water for 3 hours and dried in a vacuum oven at 80 °C for 4 hours.

Amination (the third step) was performed by stirring 0.5 M HCl solution at a speed of 200 rpm at 50 °C, reacting the nitrated Nafion 117 for 3 hours, washing the resulting product with deionized water for 3 hours, and drying the resulting product in a vacuum oven at 80 °C for 4 hours.

Finally, alkaline treatment (the fourth step) was performed by stirring 0.5 M KOH solution at a speed of 200 rpm at 50 °C, reacting the aminated Nafion117 for 3 hours, washing the resulting product with deionized water for 3 hours, and drying the resulting product in a vacuum oven at 80 °C for 4 hours.

<Reference example 2>

Chlorination (the first step) in Reaction Scheme 2 was performed by stirring 5 g/mL of $SOCl_2$/dichloromethane at a speed of 400 rpm in a nitrogen atmosphere at 40 °C and reacting Nafion 117, which is a perfluorinated sulfonic acid ionomer-based electrolyte membrane, for 4 hours. After the reaction, the resulting product was washed with dichloromethane for 5 minutes and dried in a vacuum oven at 80 °C for 4 hours.

Subsequently, the introduction of bridge groups (the second step) was performed by stirring chlorobenzene solution at a speed of 200 rpm in nitrogen atmosphere at 80 °C and reacting the chlorinated Nafion117 for 12 hours. Afterward, the resulting product was washed with deionized water for 3 hours and dried in a vacuum oven at 80 °C for 4 hours.

Finally, substitution the chlorine groups with phosphonium group (the third step) was performed by stirring a MeOH solution to which 30 wt% tris(2,4,6-trimethoxyphenyl)-phosphine (TTMPP) was added at a speed of 200 rpm in a nitrogen atmosphere at 30 °C, reacting the phenyl chlorinated Nafion117 for 24 hours, washing the resulting product with deionized water for 3 hours, and treating the resulting product with 1 M KOH aqueous solution at a speed of 200 rpm at 50 °C to convert $Cl^-$ groups into $OH^-$ groups. Afterward, the resulting product was washed with deionized water for 3 hours and dried in a vacuum oven at 80 °C for 4 hours.

<Reference example 3>

An anion exchange membrane was prepared in the same manner as described in Example 2, except that the introduction of a bridge group (the second step) was performed by reacting Nafion117, which is the chlorinated electrolyte membrane prepared in the first step, at 10 °C for 24 hours, and the substitution the chlorine group with phosphonium

group (the third step) was performed by reacting the resulting product at 10 °C for 36 hours.

<Reference Example 4>

An anion exchange membrane was prepared in the same manner as described in Example 2, except that the introduction of a bridge group (the second step) was performed by reacting the Nafion117, which is the chlorinated electrolyte membrane prepared in the first step, at 130 °C for 30 seconds, and the substitution the chlorine group with phosphonium group (the third step) was performed by reacting the resulting product at 80 °C for 30 seconds.

<Reference Example 5>

An anion exchange membrane was prepared in the same manner as described in Example 2, except that and substitution the chlorine group with imidazolium group (the third step) of Reaction Scheme 3 was performed by stirring 30 wt% 1-methylimidazole-added 1-propyl alcohol at a speed of 200 rpm in a nitrogen atmosphere at 30 °C and reacting Nafion117 undergoing the introduction of a bridge group (the second step) described in Example 2 for 24 hours, washing the resulting product with deionized water for 3 hours and treating the resulting product with 1 M KOH aqueous solution at a speed of 200 rpm at 50 °C for 3 hours to convert a $Cl^-$group into a $OH^-$ group, and washing the resulting product with deionized water for 3 hours and drying the resulting product in a vacuum oven at 80 °C for 4 hours.

<Reference Example 6>

An anion exchange membrane was prepared in the same manner as described in Example 3, except that the introduction of a bridge group (the second step) was performed by reacting the Nafion117, which is the chlorinated electrolyte membrane prepared in the first step, at 10 °C for 24 hours, and the substitution the chlorine group with imidazolium group (the third step) was performed by reacting the resulting product at 10 °C for 36 hours.

<Reference Example 7>

An anion exchange membrane was prepared in the same manner as described in Example 3, except that the introduction of a bridge group (the second step) was performed by reacting the Nafion117, which is the chlorinated electrolyte membrane prepared in the first step, at 130 °C for 30 seconds, and the substitution the chlorine group with imidazolium group was performed by reacting the resulting product at 80 °C for 30 seconds.

<Reference Example 8>

An anion exchange membrane was prepared in the same manner as described in Example 2, except that the substitution the chlorine group with pyridinium group (the third step) of Reaction Scheme 4 was performed by stirring a 30 wt% pyridine-added n-butyl alcohol solution at a speed of 200 rpm in a nitrogen atmosphere at 30 °C and reacting Nafion117 undergoing the introduction of a bridge group (the second step) in Example 2 for 24 hours, washing the resulting product with deionized water for 3 hours, treating the resulting product with 1 M KOH aqueous solution at a speed of 200 rpm at 50 °C to convert a $Cl^-$ group into an $OH^-$ group for 3 hours, and washing the resulting product with deionized water for 3 hours and drying the resulting result in a vacuum oven at 80 °C for 4 hours.

<Reference Example 9>

An anion exchange membrane was prepared in the same manner as described in Example 8, except that the introduction of a bridge group (the second step) was performed by reacting Nafion117, which is the chlorinated electrolyte membrane prepared in the first step, at 10 °C for 24 hours, and the substitution the chlorine group with pyridinium group (the third step) was performed by reacting the resulting product at 10 °C for 36 hours.

<Reference Example 10>

An anion exchange membrane was prepared in the same manner as described in Example 8, except that the introduction of a bridge group (the second step) was performed by reacting Nafion117, which is the chlorinated electrolyte membrane prepared in the first step, at 130 °C for 30 seconds, and the substitution the chlorine group with pyridinium group (the third step) was performed by reacting the resulting product at 80 °C for 30 seconds.

<Reference Example 11>

An anion exchange membrane was prepared in the same manner as described in Example 2, except that a substitution the chlorine group with sulfonium group (the third step) of Reaction Scheme 5 was performed by stirring 30 wt% dimethyl sulfide-added MeOH at a speed of 200 rpm in a nitrogen atmosphere at 30 °C and reacting Nafion117 undergoing the introduction of a bridge group (the second step) in Example 2 for 24 hours, washing the resulting product with deionized water for 3 hours and treating the resulting product with 1 M KOH aqueous solution at a speed of 200 rpm for 3 hours at 50 °C to convert $Cl^-$ group into $OH^-$ group, and washing the resulting product with deionized water for 3 hours and drying the resulting product in a vacuum oven at 80 °C for 4 hours.

<Reference Example 12>

An anion exchange membrane was prepared in the same manner as described in Example 11, except that the introduction of a bridge group (the second step) was performed by reacting Nafion117, which is the chlorinated electrolyte membrane prepared in the first step, at 10 °C for 24 hours, and the substitution the chlorine group with pyridinium group (the third step) was performed by reacting the resulting product at 10 °C for 36 hours.

<Reference Example 13>

An anion exchange membrane was prepared in the same manner as described in Example 11, except that the introduction of a bridge group (the second step) was performed by reacting Nafion117, which is the chlorinated electrolyte membrane prepared in the first step, at 130 °C for 30 seconds and the substitution the chlorine group with pyridinium group (the third step) was performed by reacting the resulting product at 80 °C for 30 seconds.

<Example 14>

An anion exchange membrane was prepared in the same manner as described in Example 1, except that Nafion117-PFM, which is a reinforced composite membrane, was used as a perfluorinated sulfonic acid electrolyte membrane.

<Reference Example 15>

An anion exchange membrane was prepared in the same manner as described in Example 2, except that Nafion117-PFM, which is a reinforced composite membrane, was used as a perfluorinated sulfonic acid electrolyte membrane.

<Reference Example 16>

An anion exchange membrane was prepared in the same manner as described in Example 5, except that Nafion117-PFM, which is a reinforced composite membrane, was used as a perfluorinated sulfonic acid electrolyte membrane.

<Reference Example 17>

An anion exchange membrane was prepared in the same manner as described in Example 8, except that Nafion117-PFM, which is a reinforced composite membrane, was used as a perfluorinated sulfonic acid electrolyte membrane.

<Reference Example 18>

An anion exchange membrane was prepared in the same manner as described in Example 11, except that Nafion117-PFM, which is a reinforced composite membrane, was used as a perfluorinated sulfonic acid electrolyte membrane.

<Example 19>

An anion exchange membrane was prepared in the same manner as described in Example 1, except that, in the chlorination (the first step), Nafion117, which is a perfluorinated sulfonic acid ionomer-based electrolyte membrane,

was stirred in a 1 g/mL of $SOCl_2$/dichloromethane solution at a speed of 800 rpm for 30 seconds.

<Example 20>

An anion exchange membrane was prepared in the same manner as described in Example 1, except that the chlorination (the first step) was performed by stirring 5 g/mL of $SOCl_2$/dichloromethane at a speed of 800 rpm at 10 °C and reacting Nafion117, which is a perfluorinated sulfonic acid ionomer-based electrolyte membrane, for 24 hours.

<Example 21>

An anion exchange membrane was prepared in the same manner as described in Example 1, except that the chlorination (the first step) was performed by stirring Nafion117, which is a perfluorinated sulfonic acid ionomer-based electrolyte membrane, in 1 g/mL of $MeSO_2Cl$/dichloromethane solution at a speed of 800 rpm for 2 hours in a nitrogen atmosphere at room temperature.

<Example 22>

An anion exchange membrane was prepared in the same manner as described in Example 1, except that the chlorination (the first step) was performed by stirring Nafion117, which is a perfluorinated sulfonic acid ionomer-based electrolyte membrane, in 5 g/mL of $MeSO_2Cl$/dichloromethane solution at a speed of 400 rpm for 12 hours in an air atmosphere at room temperature.

<Example 23>

An anion exchange membrane was prepared in the same manner as described in Example 1, except that the chlorination (the first step) was performed by stirring Nafion117, which is a perfluorinated sulfonic acid ionomer-based electrolyte membrane, in 0.5 g/mL of $PCl_5/POCl_3$ solution at a speed of 400 rpm for 12 hours at 80 °C.

<Example 24>

An anion exchange membrane was prepared in the same manner as described in Example 1, except that the chlorination (the first step) was performed by stirring Nafion117, which is a perfluorinated sulfonic acid ionomer-based electrolyte membrane, in 5 g/mL of PCl5/$POCl_3$ solution at a speed of 200 rpm for two hours at 110°C.

<Example 25>

An anion exchange membrane was prepared in the same manner as described in Example 1, except that the nitration (the second step) was performed by reacting Nafion117, which is the electrolyte membrane chlorinated (the first step) according to Example 1, for 30 seconds in a nitrogen atmosphere at 110 °C.

<Example 26>

An anion exchange membrane was prepared in the same manner as described in Example 1, except that the nitration (the second step) was performed by reacting Nafion117, which is the electrolyte membrane chlorinated (the first step) according to Example 1, for 12 hours in a nitrogen atmosphere at 40 °C.

<Example 27>

An anion exchange membrane was prepared in the same manner as described in Example 1, except that the nitration (the second step) was performed by reacting Nafion117, which is the electrolyte membrane chlorinated (the first step) according to Example 1, for 24 hours in a nitrogen atmosphere at 10 °C.

<Example 28>

An anion exchange membrane was prepared in the same manner as described in Example 1, except that the nitration (the second step) was performed by stirring a 99.0% nitrobenzene solution at a speed of 200 rpm in a nitrogen atmosphere at 80 °C and reacting Nafion117, which is the electrolyte membrane chlorinated (the first step) according to Example 1, for 7 hours.

<Example 29>

An anion exchange membrane was prepared in the same manner as described in Example 1, except that the amination (the third step) was performed by reacting Nafion117, which is the electrolyte membrane nitrated (the second step) according to Example 1, for 30 seconds in a nitrogen atmosphere at 100 °C.

<Example 30>

An anion exchange membrane was prepared in the same manner as described in Example 1, except that the amination (the third step) was performed by reacting Nafion117, which is the electrolyte membrane nitrated (the second step) according to Example 1, for 6 hours in a nitrogen atmosphere at 50 °C.

<Example 31>

An anion exchange membrane was prepared in the same manner as described in Example 1, except that the amination (the third step) was performed by reacting Nafion117, which is the electrolyte membrane nitrated (the second step) according to Example 1, for 12 hours in a nitrogen atmosphere at 10 °C.

<Example 32>

An anion exchange membrane was prepared in the same manner as described in Example 1, except that the alkaline treatment (the fourth step) was performed by reacting Nafion117, which is the electrolyte membrane aminated (the third step) according to Example 1, for 30 seconds in a nitrogen atmosphere at 110 °C.

<Example 33>

An anion exchange membrane was prepared in the same manner as described in Example 1, except that the alkaline treatment (the fourth step) was performed by reacting Nafion117, which is the electrolyte membrane aminated (the third step) according to Example 1, for 6 hours in a nitrogen atmosphere at 80 °C.

<Example 34>

An anion exchange membrane was prepared in the same manner as described in Example 1, except that the alkaline treatment (the fourth step) was performed by reacting Nafion117, which is the electrolyte membrane aminated (the third step) according to Example 1, for 12 hours in a nitrogen atmosphere at 10 °C.

<Example 35>

An anion exchange membrane was prepared in the same manner as described in Example 1, except that the alkaline treatment (the fourth step) was performed by stirring 0.5 mol NaOH solution at a speed in a range of 200 to 1000 rpm in a nitrogen atmosphere at 50 °C and reacting Nafion117, which is the electrolyte membrane aminated (the third step) according to Example 1, for 3 hours.

<Example 36>

An anion exchange membrane was prepared in the same manner as described in Example 1, except that Nafion 211 was used as a perfluorinated sulfonic acid electrolyte membrane.

<Example 37>

An anion exchange membrane was prepared in the same manner as described in Example 1, except that Nafion 212 was used as a perfluorinated sulfonic acid electrolyte membrane.

<Example 38>

An anion exchange membrane was prepared in the same manner as described in Example 1, except that 3M 725 was used as a perfluorinated sulfonic acid electrolyte membrane.

<Example 39>

An anion exchange membrane was prepared in the same manner as described in Example 1, except that 3M 800 was used as a perfluorinated sulfonic acid electrolyte membrane.

<Example 40>

An anion exchange membrane was prepared in the same manner as described in Example 1, except that a reinforced composite membrane (3M 725-PFM) was used as a perfluorinated sulfonic acid electrolyte membrane.

<Example 41>

An anion exchange membrane was prepared in the same manner as described in Example 1, except that Aquivion 72S was used as a perfluorinated sulfonic acid electrolyte membrane.

<Example 42>

An anion exchange membrane was prepared in the same manner as described in Example 1, except that Aquivion 79S was used as a perfluorinated sulfonic acid electrolyte membrane.

<Reference Example 43>

An anion exchange membrane was prepared in the same manner as described in Example 2, except that Nafion 211 was used as a perfluorinated sulfonic acid electrolyte membrane.

<Reference Example 44>

An anion exchange membrane was prepared in the same manner as described in Example 2, except that Nafion 212 was used as a perfluorinated sulfonic acid electrolyte membrane.

<Reference Example 45>

An anion exchange membrane was prepared in the same manner as described in Example 2, except that 3M 725 was used as a perfluorinated sulfonic acid electrolyte membrane.

<Reference Example 46>

An anion exchange membrane was prepared in the same manner as described in Example 2, except that 3M 800 was used as a perfluorinated sulfonic acid electrolyte membrane.

<Reference Example 47>

An anion exchange membrane was prepared in the same manner as described in Example 2, except that a reinforced composite membrane (3M 725-PFM) was used as a perfluorinated sulfonic acid electrolyte membrane.

<Reference Example 48>

An anion exchange membrane was prepared in the same manner as described in Example 2, except that Aquivion 72S was used as a perfluorinated sulfonic acid electrolyte membrane.

<Reference Example 49>

An anion exchange membrane was prepared in the same manner as described in Example 2, except that Aquivion 79S was used as a perfluorinated sulfonic acid electrolyte membrane.

<Reference Example 50>

An anion exchange membrane was prepared in the same manner as described in Example 5, except that

Nafion 211 was used as a perfluorinated sulfonic acid electrolyte membrane.

<Reference Example 51>

An anion exchange membrane was prepared in the same manner as described in Example 5, except that Nafion 212 was used as a perfluorinated sulfonic acid electrolyte membrane.

<Reference Example 52>

An anion exchange membrane was prepared in the same manner as described in Example 5, except that 3M 725 was used as a perfluorinated sulfonic acid electrolyte membrane.

<Reference Example 53>

An anion exchange membrane was prepared in the same manner as described in Example 5, except that 3M 800 was used as a perfluorinated sulfonic acid electrolyte membrane.

<Reference Example 54>

An anion exchange membrane was prepared in the same manner as described in Example 5, except that a reinforced composite membrane (3M 725-PFM) was used as a perfluorinated sulfonic acid electrolyte membrane.

<Reference Example 55>

An anion exchange membrane was prepared in the same manner as described in Example 5, except that Aquivion 72S was used as a perfluorinated sulfonic acid electrolyte membrane.

<Reference Example 56>

An anion exchange membrane was prepared in the same manner as described in Example 5, except that Aquivion 79S was used as a perfluorinated sulfonic acid electrolyte membrane.

<Reference Example 57>

An anion exchange membrane was prepared in the same manner as described in Example 8, except that Nafion 211 was used as a perfluorinated sulfonic acid electrolyte membrane.

<Reference Example 58>

An anion exchange membrane was prepared in the same manner as described in Example 8, except that Nafion 212 was used as a perfluorinated sulfonic acid electrolyte membrane.

<Reference Example 59>

An anion exchange membrane was prepared in the same manner as described in Example 8, except that 3M 725 was used as a perfluorinated sulfonic acid electrolyte membrane.

<Reference Example 60>

An anion exchange membrane was prepared in the same manner as described in Example 8, except that 3M 800 was used as a perfluorinated sulfonic acid electrolyte membrane.

<Reference Example 61>

An anion exchange membrane was prepared in the same manner as described in Example 8, except that a reinforced composite membrane (3M 725-PFM) was used as a perfluorinated sulfonic acid electrolyte membrane.

<Reference Example 62>

An anion exchange membrane was prepared in the same manner as described in Example 8, except that Aquivion 72S was used as a perfluorinated sulfonic acid electrolyte membrane.

<Reference Example 63>

An anion exchange membrane was prepared in the same manner as described in Example 8, except that Aquivion 79S was used as a perfluorinated sulfonic acid electrolyte membrane.

<Reference Example 64>

An anion exchange membrane was prepared in the same manner as described in Example 11, except that Nafion 211 was used as a perfluorinated sulfonic acid electrolyte membrane.

<Reference Example 65>

An anion exchange membrane was prepared in the same manner as described in Example 11, except that Nafion 212 was used as a perfluorinated sulfonic acid electrolyte membrane.

<Reference Example 66>

An anion exchange membrane was prepared in the same manner as described in Example 11, except that 3M 725 was used as a perfluorinated sulfonic acid electrolyte membrane.

<Reference Example 67>

An anion exchange membrane was prepared in the same manner as described in Example 11, except that 3M 800 was used as a perfluorinated sulfonic acid electrolyte membrane.

<Reference Example 68>

An anion exchange membrane was prepared in the same manner as described in Example 11, except that a reinforced composite membrane (3M 725-PFM) was used as a perfluorinated sulfonic acid electrolyte membrane.

<Reference Example 69>

An anion exchange membrane was prepared in the same manner as described in Example 11, except that Aquivion 72S was used as a perfluorinated sulfonic acid electrolyte membrane.

<Reference Example 70>

An anion exchange membrane was prepared in the same manner as described in Example 11, except that Aquivion 79S was used as a perfluorinated sulfonic acid electrolyte membrane.

<Comparative Example 1>

A 200-μm Neosepta-AHA reinforced electrolyte membrane consisting of a hydrocarbon commercially available from ASTOM was used.

<Comparative Example 2>

A 180-μm Neosepta-ACLE-5P reinforced electrolyte membrane consisting of hydrocarbon commercially available from ASTOM was used.

<Comparative Example 3>

A 150-μm Selemion-DSV reinforced electrolyte membrane consisting of hydrocarbon commercially available

from AGC ENGINEERING was used.

<Comparative Example 4>

A 148-μm Selemion-ASV reinforced electrolyte membrane consisting of hydrocarbon commercially available from AGC ENGINEERING was used.

<Experimental Example 1> Comparison of FT-IR spectra

Through FT-IR analysis, chemical modification was confirmed. As shown in FIG. 1, in a step by step FT-IR spectra for preparing an anion exchange membrane using Nafion117 according to Example 1, after chlorination, the S-OH peak (1, 3418 $cm^{-1}$) disappeared and the S-Cl peak (2, 1421 $cm^{-1}$) was observed, and after nitration, the S-Cl peak disappeared and the N-O (4, 1575 $cm^{-1}$) and C-H (3, 2963 $cm^{-1}$) peaks were observed. Afterward, it can be confirmed that, after alkaline treatment was completed following the amination, the N-O peak disappeared, and the N-H (5, 3456 $cm^{-1}$) peak was observed.

<Experimental Example 2> Measurement of hydrophilicity

The change in chemical modification was examined by measuring hydrophilicity step by step in each example of the present invention, and as shown in FIG. 2, hydrophobicity according to the chemical modification of a sulfonic acid group with high hydrophilicity was confirmed.

<Experimental Example 3> Measurement of density

The membranes prepared in the examples, reference examples and the comparative examples were swollen in deionized water to equilibrium, and then densities were calculated according to Equation 1 below. The result is shown in FIG. 3.

[Equation 1]

$$\text{Density (g/cm}^3\text{)} = W / (l_1 \times l_2 \times T)$$

[In Equation 1, W: the weight of membrane (g), $l_1$: the width of membrane (cm), $l_2$: the length of membrane (cm), T: the thickness of membrane (μm)]

<Experimental Example 4> $OH^-$ conductivity

The $OH^-$ ion conductivity of the anion exchange membrane prepared by the chemical modification described in each example was measured. The $OH^-$conductivity was calculated by Equation 2 below after measuring ohmic resistance or bulk resistance using a four point probe AC impedance spectroscopic method, and the result is shown in the table of FIG. 4 below.

[Equation 2]

$$\sigma = L/RS$$

[In Equation 2, σ: $OH^-$ conductivity (S/cm), R: Ohmic resistance of polymer electrolyte (Ω), L: Distance between electrodes (cm), S: Area in electrolyte with constant current ($cm^2$)]

As shown in FIG. 5, it can be confirmed that $OH^-$ ion conductivities of Nafion117 AEM and Nafion117-PFM AEM, which are perfluorinated anion conductive polymer electrolyte membranes undergoing chemical modification according to examples and reference examples of the present invention, were significantly improved compared to commercially available hydrocarbon-based ionomer-based polymer electrolyte membranes described in the comparative examples. FIG. 6 is a diagram showing the hydrophilic-hydrophobic phase separation structure of a perfluorinated ionomer and a hydrocarbon-based ionomer. As confirmed in FIG. 6, a perfluorinated ionomer-based anion exchange membrane having an established hydrophilic-hydrophobic phase separation structure exhibits a higher performance than a hydrocarbon-based ionomer having an insufficient structure.

<Experimental Example 5> Area specific resistance

The area specific resistance of the anion exchange membrane prepared by chemical modification described in an example was calculated by Equation 3 below with ion conductivity value, and the result is shown in the table of FIG. 7.

[Equation 3]

$$R\ (\Omega\ cm^2) = T/\sigma$$

[In Equation 3, σ: $OH^-$ conductivity (S/cm), T: the thickness of ion-exchange membrane (cm)]

In addition, as shown in the graph of FIG. 8, it can be seen that the perfluorinated anion exchange membrane prepared according to an example of the present invention exhibits significantly low area specific resistance and thus exhibits a higher electrochemical property than the hydrocarbon-based anion exchange membrane described in a comparative example.

## Claims

1. A method of preparing an anion exchange membrane **characterized by** substituting sulfonic acid groups in a perfluorinated sulfonic acid electrolyte membrane with ammonium groups, which are anion-conductive functional groups, the method comprising:

    a) chlorinating sulfonic acid groups in a perfluorinated sulfonic acid electrolyte membrane;
    b) nitrating the chlorinated electrolyte membrane;
    c) aminating the nitrated electrolyte membrane; and
    d) activating the anion-conductive functional groups by treating the aminated electrolyte membrane under alkaline conditions.

2. The method of claim 1, wherein the perfluorinated sulfonic acid electrolyte membrane is a perfluorinated sulfonic acid ionomer free-standing membrane or a reinforced composite membrane including porous supports.

3. The method of claim 2, wherein the perfluorinated sulfonic acid ionomer is selected from the group consisting of poly(perfluorosulfonic acid)s, sulfonic acid-containing-copolymers composed of tetrafluoroethylene and fluorovinylether, and their mixtures thereof.

4. The method of claim 2, wherein the porous supports of the reinforced composite membrane are selected from the group consisting of polytetrafluoroethylene, poly(vinyl difluoroethylene), polyethylene, polypropylene, polyethylene terephthalate), polyimide and polyamide.

5. The method of claim 1, wherein the chlorination is performed by treating the perfluorinated sulfonic acid electrolyte membrane with a solution including one or more compounds selected from the group consisting of $SOCl_2$, $MeSO_2Cl$, $PCl_5$, $POCl_3$, and dichloromethane (DCM).

6. The method of claim 1, wherein the nitration is performed by treatment with nitromethane or nitrobenzene solution.

7. The method of claim 1, wherein the amination is performed by treating the nitrated electrolyte membrane with an aqueous solution including HCl.

8. The method of claim 1, wherein the alkaline treatment is performed by treating the aminated electrolyte membrane with an aqueous solution including one or more compounds selected from the group consisting of LiOH, NaOH and KOH.

9. An anion exchange membrane in which sulfonic acid groups in a perfluorinated sulfonic acid electrolyte membrane are substituted with anion-conductive functional groups, wherein the anion-conductive functional groups are selected from ammonium group, wherein the anion-conductive functional groups are chemically bonded with - $SO_2$ groups in the perfluorinated sulfonic acid electrolyte membrane via bridge groups selected from methyl group and phenyl group.

## Patentansprüche

1. Verfahren zum Herstellen einer Anionenaustauschmembran, **gekennzeichnet durch** Substituieren von Sulfonsäuregruppen in einer perfluorierten Sulfonsäure-Elektrolytmembran durch Ammoniumgruppen, die anionenleitende funktionelle Gruppen sind, wobei das Verfahren umfasst:

   a) Chlorieren von Sulfonsäuregruppen in einer perfluorierten Sulfonsäure-Elektrolytmembran;
   b) Nitrieren der chlorierten Elektrolytmembran;
   c) Aminieren der nitrierten Elektrolytmembran; und
   d) Aktivieren der anionenleitenden funktionellen Gruppen durch Behandeln der aminierten Elektrolytmembran unter alkalischen Bedingungen.

2. Verfahren nach Anspruch 1, wobei die perfluorierte Sulfonsäure-Elektrolytmembran eine freistehende perfluorierte Sulfonsäure-Ionomer-Membran oder eine verstärkte Verbundmembran ist, die poröse Träger beinhaltet.

3. Verfahren nach Anspruch 2, wobei das perfluorierte Sulfonsäure-Ionomer ausgewählt ist aus der Gruppe bestehend aus Poly(perfluorsulfonsäure)n, sulfonsäurehaltigen Copolymeren, die aus Tetrafluorethylen und Fluorvinylether zusammengesetzt sind, und deren Gemischen.

4. Verfahren nach Anspruch 2, wobei die porösen Träger der verstärkten Verbundmembran ausgewählt sind aus der Gruppe bestehend aus Polytetrafluorethylen, Poly(vinyldifluorethylen), Polyethylen, Polypropylen, Poly(ethylenterephthalat), Polyimid und Polyamid.

5. Verfahren nach Anspruch 1, wobei die Chlorierung durch Behandeln der perfluorierten Sulfonsäure-Elektrolytmembran mit einer Lösung durchgeführt wird, die eine oder mehrere Verbindungen beinhaltet, ausgewählt aus der Gruppe bestehend aus $SOCl_2$, $MeSO_2Cl$, $PCl_5$, $POCl_3$ und Dichlormethan (DCM).

6. Verfahren nach Anspruch 1, wobei die Nitrierung durch Behandlung mit Nitromethan- oder Nitrobenzollösung durchgeführt wird.

7. Verfahren nach Anspruch 1, wobei die Aminierung durch Behandeln der nitrierten Elektrolytmembran mit einer wässrigen Lösung, die HCl beinhaltet, durchgeführt wird.

8. Verfahren nach Anspruch 1, wobei die alkalische Behandlung durch Behandeln der aminierten Elektrolytmembran mit einer wässrigen Lösung durchgeführt wird, die eine oder mehrere Verbindungen beinhaltet, ausgewählt aus der Gruppe bestehend aus LiOH, NaOH und KOH.

9. Anionenaustauschmembran, bei der Sulfonsäuregruppen in einer perfluorierten Sulfonsäure-Elektrolytmembran durch anionenleitende funktionelle Gruppen substituiert sind, wobei die anionenleitenden funktionellen Gruppen ausgewählt sind aus Ammoniumgruppe, wobei die anionenleitenden funktionellen Gruppen über Brückengruppen, ausgewählt aus Methylgruppe und Phenylgruppe, chemisch mit $-SO_2$-Gruppen in der perfluorierten Sulfonsäure-Elektrolytmembran gebunden sind.

## Revendications

1. Procédé de préparation d’une membrane échangeuse d’anions **caractérisé par** la substitution de groupes acide sulfonique dans une membrane électrolytique d’acide sulfonique perfluoré par des groupes ammonium, qui sont des groupes fonctionnels conducteurs d’anions, le procédé comprenant :

   a) la chloration de groupes acide sulfonique dans une membrane électrolytique d’acide sulfonique perfluoré ;
   b) la nitration de la membrane électrolytique chlorée ;
   c) l’amination de la membrane électrolytique nitrée ; et
   d) l’activation des groupes fonctionnels conducteurs d’anions en traitant la membrane électrolytique aminée dans des conditions alcalines.

2. Procédé selon la revendication 1, dans lequel la membrane électrolytique d’acide sulfonique perfluoré est une membrane autoportante d’ionomère d’acide sulfonique perfluoré ou une membrane composite renforcée comportant

des supports poreux.

3. Procédé selon la revendication 2, dans lequel l'ionomère d'acide sulfonique perfluoré est sélectionné dans le groupe constitué de poly(acides perfluorosulfoniques), de copolymères contenant de l'acide sulfonique composés de tétrafluoroéthylène et d'éther fluorovinylique, et de leurs mélanges.

4. Procédé selon la revendication 2, dans lequel les supports poreux de la membrane composite renforcée sont sélectionnés dans le groupe constitué de polytétrafluoroéthylène, poly(difluoroéthylène de vinyle), polyéthylène, polypropylène, poly(éthylène téréphtalate), polyimide et polyamide.

5. Procédé selon la revendication 1, dans lequel la chloration est réalisée en traitant la membrane électrolytique d'acide sulfonique perfluoré avec une solution comportant un ou plusieurs composés sélectionnés dans le groupe constitué de $SOCl_2$, $MeSO_2Cl$, $PCl_5$, $POCl_3$ et dichlorométhane (DCM).

6. Procédé selon la revendication 1, dans lequel la nitration est réalisée par traitement avec une solution de nitrométhane ou de nitrobenzène.

7. Procédé selon la revendication 1, dans lequel l'amination est réalisée en traitant la membrane électrolytique nitrée avec une solution aqueuse comportant du HCl.

8. Procédé selon la revendication 1, dans lequel le traitement alcalin est réalisé en traitant la membrane électrolytique aminée avec une solution aqueuse comportant un ou plusieurs composés sélectionnés dans le groupe constitué de LiOH, NaOH et KOH.

9. Membrane échangeuse d'anions dans laquelle des groupes acide sulfonique dans une membrane électrolytique d'acide sulfonique perfluoré sont substitués par des groupes fonctionnels conducteurs d'anions, dans laquelle les groupes fonctionnels conducteurs d'anions sont sélectionnés parmi un groupe ammonium, dans laquelle les groupes fonctionnels conducteurs d'anions sont chimiquement liés à des groupes $-SO_2$ dans la membrane électrolytique d'acide sulfonique perfluoré via des groupes de pont sélectionnés parmi un groupe méthyle et un groupe phényle.

[FIG. 1]

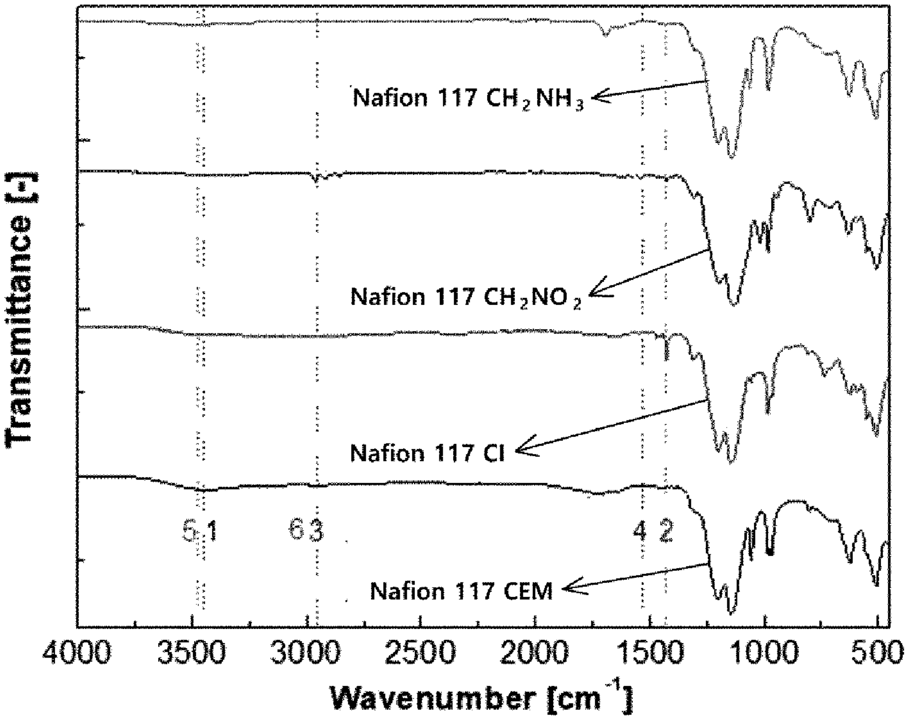
Transmittance [-]
Nafion 117 CH2NH3
Nafion 117 CH2NO2
Nafion 117 Cl
Nafion 117 CEM
5 1
6 3
4 2
4000
3500
3000
2500
2000
1500
1000
500
Wavenumber [cm-1]

[FIG. 2]

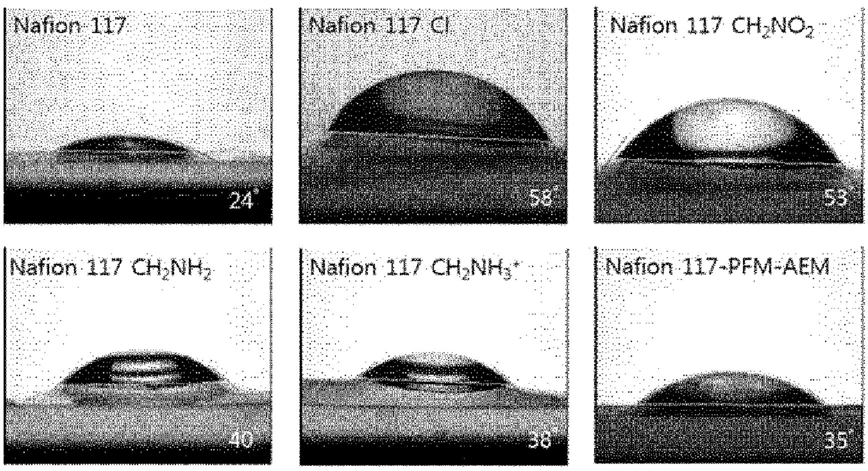
Nafion 117
24°
Nafion 117 Cl
58°
Nafion 117 CH2NO2
53°
Nafion 117 CH2NH2
40°
Nafion 117 CH2NH3+
38°
Nafion 117-PFM-AEM
35°

[FIG. 3]

| Classification | Density (g/cm²) | Thinckness of membrane (㎛) | Classification | Density (g/cm²) | Thickness of membrane (㎛) |
|---|---|---|---|---|---|
| Example 1 | 1.92 | 176 | Example 39 | 2.13 | 53 |
| Example 2 | 1.95 | 177 | Example 40 | 2.20 | 15 |
| Example 3 | 1.91 | 176 | Example 41 | 2.00 | 56 |
| Example 4 | 1.93 | 177 | Example 42 | 1.99 | 55 |
| Example 5 | 1.94 | 175 | Example 43 | 2.00 | 26 |
| Example 6 | 1.93 | 176 | Example 44 | 1.99 | 51 |
| Example 7 | 1.91 | 175 | Example 45 | 2.11 | 53 |
| Example 8 | 1.98 | 174 | Example 46 | 2.05 | 52 |
| Example 9 | 1.96 | 175 | Example 47 | 2.21 | 13 |
| Example 10 | 1.97 | 174 | Example 48 | 2.01 | 53 |
| Example 11 | 1.93 | 177 | Example 49 | 2.08 | 50 |
| Example 12 | 1.95 | 177 | Example 50 | 2.02 | 25 |
| Example 13 | 1.94 | 176 | Example 51 | 1.97 | 50 |
| Example 14 | 2.06 | 13 | Example 52 | 2.09 | 52 |
| Example 15 | 2.10 | 15 | Example 53 | 2.00 | 51 |
| Example 16 | 2.08 | 14 | Example 54 | 2.19 | 15 |
| Example 17 | 2.07 | 16 | Example 55 | 1.99 | 52 |
| Example 18 | 2.06 | 12 | Example 56 | 2.03 | 51 |
| Example 19 | 1.94 | 176 | Example 57 | 2.01 | 27 |
| Example 20 | 1.95 | 174 | Example 58 | 1.98 | 53 |
| Example 21 | 1.91 | 179 | Example 59 | 2.07 | 50 |
| Example 22 | 1.94 | 175 | Example 60 | 2.02 | 53 |
| Example 23 | 1.97 | 176 | Example 61 | 2.16 | 13 |
| Example 24 | 1.98 | 175 | Example 62 | 2.01 | 54 |
| Example 25 | 1.97 | 175 | Example 63 | 2.01 | 55 |
| Example 26 | 1.98 | 174 | Example 64 | 2.09 | 25 |
| Example 27 | 1.96 | 176 | Example 65 | 1.99 | 54 |
| Example 28 | 1.96 | 177 | Example 66 | 2.05 | 52 |
| Example 29 | 1.94 | 176 | Example 67 | 2.06 | 51 |
| Example 30 | 1.95 | 178 | Example 68 | 2.20 | 14 |
| Example 31 | 1.98 | 175 | Example 69 | 2.02 | 52 |
| Example 32 | 1.94 | 177 | Example 70 | 2.04 | 53 |
| Example 33 | 1.98 | 177 | Comparative Example 1 | 0.94 | 201 |
| Example 34 | 1.95 | 176 | Comparative Example 2 | 0.91 | 184 |
| Example 35 | 1.97 | 179 | Comparative Example 3 | 0.85 | 159 |
| Example 36 | 1.98 | 26 | Comparative Example 4 | 0.8 | 156 |
| Example 37 | 2.01 | 54 | | | |
| Example 38 | 2.10 | 55 | | | |

*Examples 2-13, 15-18 and 43-70 are reference examples.

[FIG. 4]

| Classification | 90 °C $OH^-$ Ion Conductivity (S/cm) | Classification | 90 °C $OH^-$ Ion Conductivity (S/cm) |
|---|---|---|---|
| Example 1 | 0,068 | Example 39 | 0,116 |
| Example 2 | 0,067 | Example 40 | 0,261 |
| Example 3 | 0,051 | Example 41 | 0,109 |
| Example 4 | 0,059 | Example 42 | 0,109 |
| Example 5 | 0,067 | Example 43 | 0,101 |
| Example 6 | 0,053 | Example 44 | 0,092 |
| Example 7 | 0,057 | Example 45 | 0,112 |
| Example 8 | 0,068 | Example 46 | 0,116 |
| Example 9 | 0,052 | Example 47 | 0,261 |
| Example 10 | 0,057 | Example 48 | 0,108 |
| Example 11 | 0,067 | Example 49 | 0,108 |
| Example 12 | 0,051 | Example 50 | 0,101 |
| Example 13 | 0,061 | Example 51 | 0,092 |
| Example 14 | 0,259 | Example 52 | 0,112 |
| Example 15 | 0,252 | Example 53 | 0,116 |
| Example 16 | 0,257 | Example 54 | 0,262 |
| Example 17 | 0,256 | Example 55 | 0,108 |
| Example 18 | 0,251 | Example 56 | 0,107 |
| Example 19 | 0,067 | Example 57 | 0,102 |
| Example 20 | 0,069 | Example 58 | 0,091 |
| Example 21 | 0,067 | Example 59 | 0,113 |
| Example 22 | 0,068 | Example 60 | 0,115 |
| Example 23 | 0,068 | Example 61 | 0,263 |
| Example 24 | 0,069 | Example 62 | 0,108 |
| Example 25 | 0,065 | Example 63 | 0,106 |
| Example 26 | 0,064 | Example 64 | 0,102 |
| Example 27 | 0,068 | Example 65 | 0,093 |
| Example 28 | 0,062 | Example 66 | 0,115 |
| Example 29 | 0,061 | Example 67 | 0,117 |
| Example 30 | 0,067 | Example 68 | 0,262 |
| Example 31 | 0,064 | Example 69 | 0,109 |
| Example 32 | 0,065 | Example 70 | 0,107 |
| Example 33 | 0,068 | Comparative Example 1 | 0,014 |
| Example 34 | 0,064 | Comparative Example 2 | 0,011 |
| Example 35 | 0,071 | Comparative Example 3 | 0,025 |
| Example 36 | 0,102 | Comparative Example 4 | 0,021 |
| Example 37 | 0,091 | | |
| Example 38 | 0,113 | | |

*Examples 2-13, 15-18 and 43-70 are reference examples.

[FIG. 5]

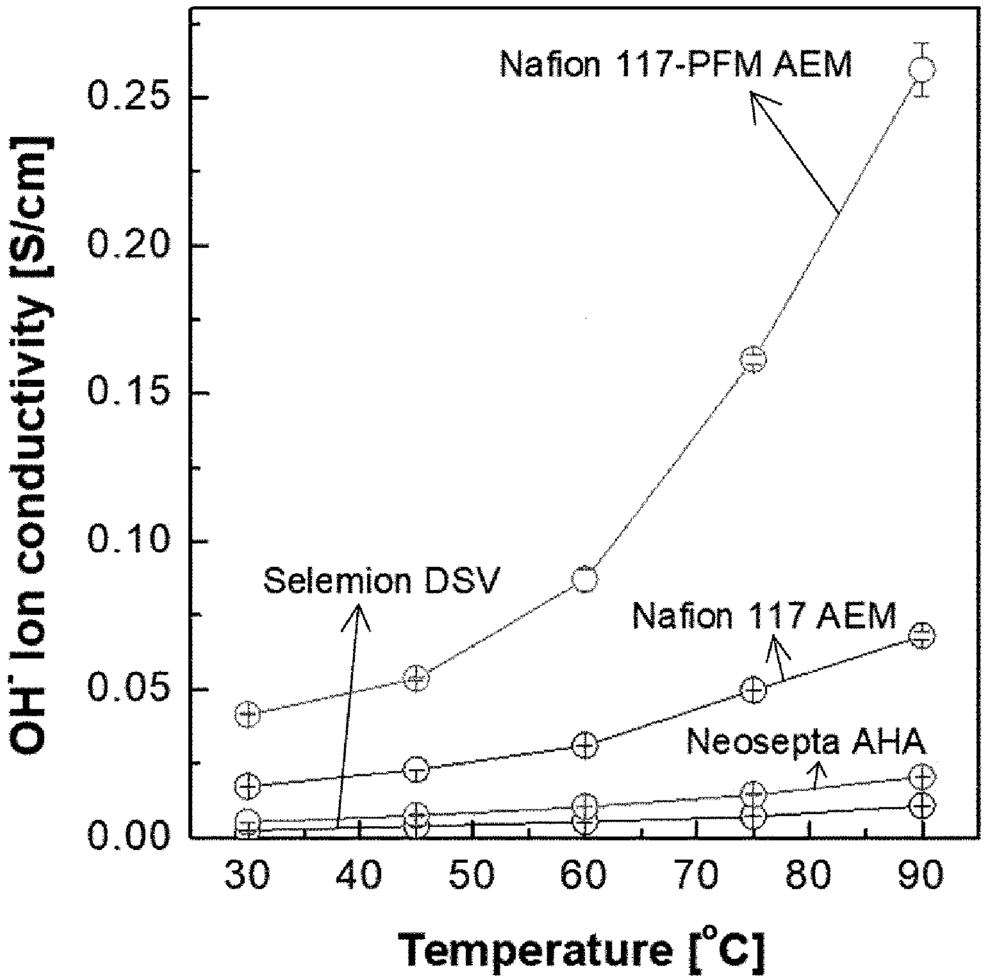
Nafion 117-PFM AEM
Selemion DSV
Nafion 117 AEM
Neosepta AHA
0.25
0.20
0.15
0.10
0.05
0.00
OH- Ion conductivity [S/cm]
30
40
50
60
70
80
90
Temperature [°C]

[FIG. 6]

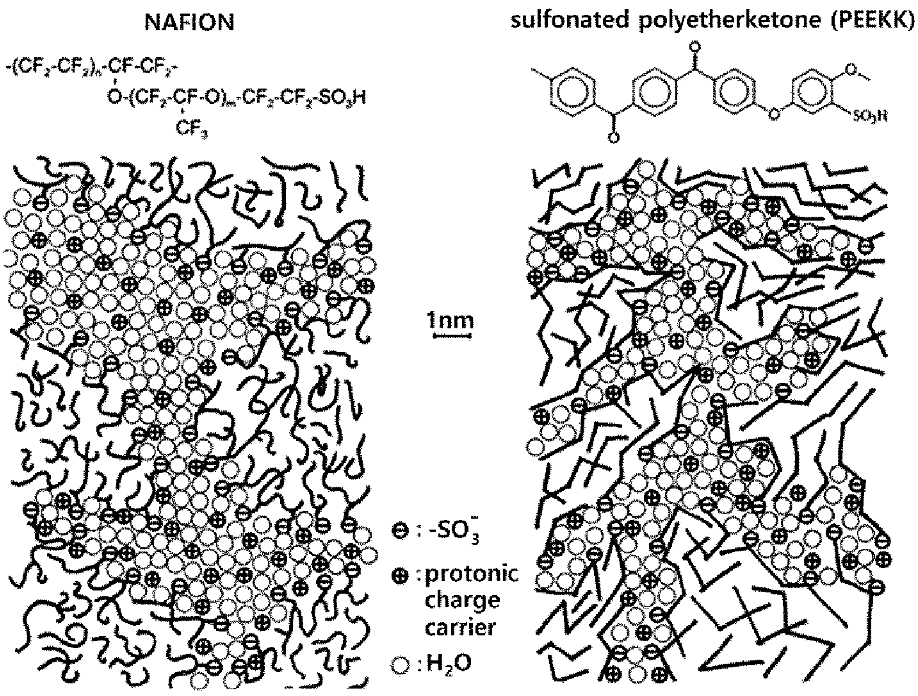
NAFION
sulfonated polyetherketone (PEEKK)
1nm
⊖ : $-SO_3^-$
⊕ : protonic charge carrier
○ : $H_2O$

[FIG. 7]

| Classification | Surface Specific Resistance (Ω cm²) | Thickness of membrane (㎛) | Classification | Surface Specific Resistance (Ω cm²) | Thickness of membrane (㎛) |
|---|---|---|---|---|---|
| Example 1 | 0,321 | 176 | Example 39 | 0,196 | 53 |
| Example 2 | 0,333 | 177 | Example 40 | 0,028 | 15 |
| Example 3 | 0,358 | 176 | Example 41 | 0,285 | 56 |
| Example 4 | 0,361 | 177 | Example 42 | 0,274 | 55 |
| Example 5 | 0,331 | 175 | Example 43 | 0,263 | 26 |
| Example 6 | 0,354 | 176 | Example 44 | 0,221 | 51 |
| Example 7 | 0,362 | 175 | Example 45 | 0,199 | 53 |
| Example 8 | 0,329 | 174 | Example 46 | 0,199 | 52 |
| Example 9 | 0,351 | 175 | Example 47 | 0,031 | 13 |
| Example 10 | 0,361 | 174 | Example 48 | 0,298 | 53 |
| Example 11 | 0,324 | 177 | Example 49 | 0,282 | 50 |
| Example 12 | 0,352 | 177 | Example 50 | 0,268 | 25 |
| Example 13 | 0,363 | 176 | Example 51 | 0,227 | 50 |
| Example 14 | 0,034 | 13 | Example 52 | 0,205 | 52 |
| Example 15 | 0,038 | 15 | Example 53 | 0,206 | 51 |
| Example 16 | 0,037 | 14 | Example 54 | 0,032 | 15 |
| Example 17 | 0,036 | 16 | Example 55 | 0,302 | 52 |
| Example 18 | 0,035 | 12 | Example 56 | 0,292 | 51 |
| Example 19 | 0,323 | 176 | Example 57 | 0,269 | 27 |
| Example 20 | 0,365 | 174 | Example 58 | 0,228 | 53 |
| Example 21 | 0,361 | 179 | Example 59 | 0,206 | 50 |
| Example 22 | 0,354 | 175 | Example 60 | 0,207 | 53 |
| Example 23 | 0,311 | 176 | Example 61 | 0,033 | 13 |
| Example 24 | 0,312 | 175 | Example 62 | 0,301 | 54 |
| Example 25 | 0,313 | 175 | Example 63 | 0,293 | 55 |
| Example 26 | 0,315 | 174 | Example 64 | 0,264 | 25 |
| Example 27 | 0,321 | 176 | Example 65 | 0,227 | 54 |
| Example 28 | 0,311 | 177 | Example 66 | 0,202 | 52 |
| Example 29 | 0,312 | 176 | Example 67 | 0,203 | 51 |
| Example 30 | 0,313 | 178 | Example 68 | 0,033 | 14 |
| Example 31 | 0,321 | 175 | Example 69 | 0,299 | 52 |
| Example 32 | 0,311 | 177 | Example 70 | 0,289 | 53 |
| Example 33 | 0,311 | 177 | Comparative Example 1 | 20,512 | 201 |
| Example 34 | 0,315 | 176 | Comparative Example 2 | 18,246 | 184 |
| Example 35 | 0,331 | 179 | Comparative Example 3 | 5,418 | 159 |
| Example 36 | 0,251 | 26 | Comparative Example 4 | 4,537 | 156 |
| Example 37 | 0,213 | 54 | | | |
| Example 38 | 0,188 | 55 | | | |

*Examples 2-13, 15-18 and 43-70 are reference examples.

[FIG. 8]

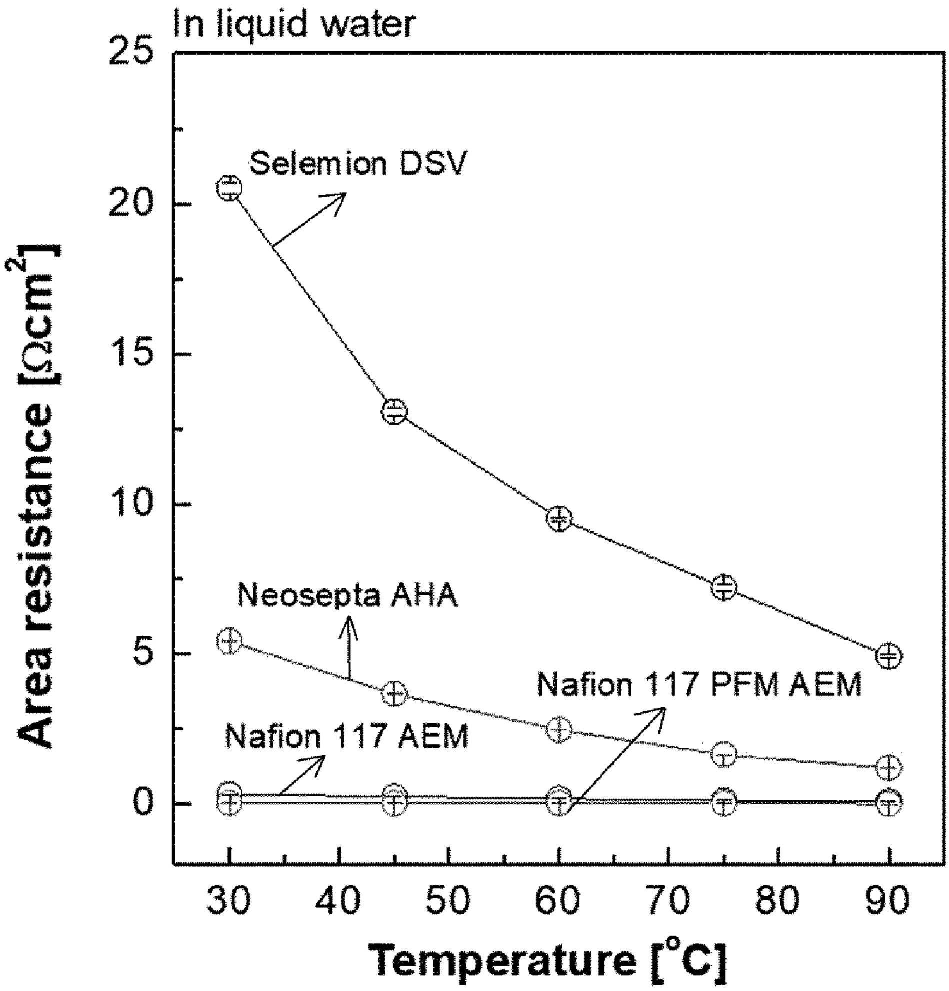
In liquid water
Area resistance [Ωcm2]
Temperature [°C]
Selemion DSV
Neosepta AHA
Nafion 117 PFM AEM
Nafion 117 AEM
0
5
10
15
20
25
30
40
50
60
70
80
90

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 10201300255821
- KR 1020140119479
- CN 102456892 A
- US 2013310246 A
- US 2004101741 A


### Non-patent literature cited in the description


- **COUTURE, G. et al.** Polymeric materials as anion-exchange membranes for alkaline fuel cells. *Progress in Polymer Science,* 2011, vol. 36 (11), ISSN 0079-6700, 1521-1557
- **MATSUI, K.** Novel anion exchange membranes having fluorocarbon backbone: Preparation and stability. *Journal of Applied Polymer Science,* 1986, vol. 32 (3), ISSN 0021-8995, 4137-4143